# EUROPÄISCHE PATENTSCHRIFT

(11) **EP 3 748 095 B1**
(45) Veröffentlichungstag und Bekanntmachung des Hinweises auf die Patenterteilung: **17.04.2024**
(21) Anmeldenummer: 20178554.0
(22) Anmeldetag: 05.06.2020
(51) Int. Cl.: E03F 5/14, E02B 8/02

(54) **SCHRÄG IN EINEN OFFENEN KANAL AUFSTELLBARE RECHENANLAGE**
RAKE DEVICE MOUNTABLE AT AN ANGLE IN AN OPEN CHANNEL
INSTALLATION DE DEGRILLAGE POUVANT ÊTRE MONTÉE INCLINÉE DANS UN CANAL OUVERT

(30) Priorität: 07.06.2019 DE 102019115584
(43) Veröffentlichungstag der Anmeldung: 09.12.2020
(73) Patentinhaber: Grimmel Wassertechnik GmbH, 61239 Ober-Mörlen (DE)
(72) Erfinder: Grimmel, Olaf, 61239 Ober-Mörlen (DE)
(74) Vertreter: Rauch, Udo

(56) Entgegenhaltungen:
- FR-A- 639 303
- US-A- 4 725 365
- US-A- 5 246 573

## Beschreibung

Die Erfindung bezieht sich auf eine schräg in einen offenen Kanal aufstellbare Rechenanlage mit
einem Rechen und einer Räumvorrichtung, die einen auf den Rechen aufsetzbaren Abstreifer aufweist,
einem Schlitten mit dem Abstreifer, einem Motor auf dem Schlitten zum Antrieb des Schlittens und wenigstens einem Rollenpaar,
und mit einem parallel zum Rechen verlaufenden, aus zwei Schienen bestehenden Schienenpaar, das ein oberes und ein unteres Ende aufweist, wobei die unteren Enden der Schienen offen sind.

Der Schlitten ist um eine quer zu den Schienen verlaufende Kippachse kippbar, so dass bei einer Abwärtsfahrt vom oberen zum unteren Ende der Schienen die Rollen des Rollenpaares auf den Schienen laufen, wobei der Abstreifer einen Abstand zum Rechen einhält, und bei einer Aufwärtsfahrt, nachdem die Rollen das offene Ende der Schienen überfahren haben, der Schlitten derart um seine Kippachse gekippt ist, dass der Abstreifer auf dem Rechen aufliegt und die Rollen Rollenpaares sich bei einer Aufwärtsfahrt unterhalb der Schienen befinden.

Rechenanlagen werden u. a. im Zulauf von Kläranlagen benötigt, um das der Kläranlage zugeführte Schmutzwasser von groben Verunreinigungen zu befreien. Die Rechenanlage ist daher einem Sandfang, einem Belebungsbecken und einem Nachklärungsbecken vorgeschaltet.

Die Rechenanlage und der Sandfang können aber nicht verhindern, dass feine Faserstoffe in das Belebungsbecken bzw. einem Nachklärungsbecken gelangen, wo sie zu größeren Gebilden agglomerieren. Dies belegen Einbauten im Belebungsbecken, wie z. B. Rührwerke, die dadurch ihre Effektivität verlieren. Die Agglomerate stellen insbesondere dann ein Problem dar, wenn ein Teil des geklärten Wassers über einen eine Pumpe aufweisenden Rücklauf in das Belebungsbecken zurückgeführt wird. Die Agglomerationen können sich nämlich in der Pumpe oder auch in anderen Einrichtungen verfangen und sie außer Betrieb setzen. Es besteht daher eine gewisse Notwendigkeit, auch solche Agglomerationen aus der Kläranlage zu entfernen.

Eine gattungsgemäße Rechenanlage ist in der US 2007/0102334 A1 offenbart. Der Schlitten weist zwei Rollenpaare auf, wobei koaxial zu dem einen Rollenpaar Ritzel vorgesehen sind, die jeweils in eine umlaufende Zahnstange eingreifen. Damit die Ritzel im steten Kontakt mit den Zahnstangen verbleiben, werden zur Führung der Rollen zwei Schienenpaare benötigt, die an ihrem unteren und oberen Ende jeweils über einen Bogen miteinander ineinander übergehen. In jeder der Schienen des oberen Schienenpaares befindet sich am Ende des oberen Bogens jeweils eine Klappe.

Bei einer Aufwärtsfahrt befinden sich die Rollen des einen Rollenpaares auf dem oberen Schienenpaar und die Rollen des anderen Rollenpaares auf dem unteren Schienenpaar, so dass der Abstreifer am Rechen anliegt. Bei der Abwärtsfahrt befinden sich die Rollen beider Rollenpaare auf dem oberen Schienenpaar. Dazu laufen die Rollen, die sich zunächst auf dem unteren Schienenpaar befunden haben, auf dem Bogen am oberen Ende der Schienen, heben die Klappe an und gelangen so auf das obere Schienenpaar.

Die Rechenanlage benötigt daher zwei Schienenpaare, was die Konstruktion schwerfälliger macht.

Rechenanlagen besitzen im Allgemeinen eine Räumvorrichtung, um das sich sammelnde Rechengut vom Rechen zu entfernen. Gemäß der DE 10 2014 006 626 A1 besitzt die Räumvorrichtung ein Räumelement in Form eines Abstreifers, der mittels eines aus zwei Armen bestehenden Hebelsystems über den Rechen gezogen wird, wobei ein Aufstellmechanismus dafür sorgt, dass bei der Aufwärtsbewegung des Abstreifers dieser auf dem Rechen liegt und bei der Rückwärtsbewegung von diesem abgehoben ist. Dazu wird ein Arm des Hebelsystems von einem rotierenden Nocken angehoben.

Gemäß der DE 2 637 805 A1 ist ein Schlitten vorgesehen, an dem sich der Abstreifer befindet. Der Schlitten ist an einem umlaufenden Band befestigt, so dass, wenn er das untere Trum entlangläuft, der Abstreifer auf dem Rechen aufgesetzt ist, und wenn er das obere Trum entlangläuft, vom Rechen abgehoben ist. Der Antrieb des Schlittens bzw. der Antrieb des Hebelsystems erfolgt mit einem außen an der Rechenanlage angebrachten feststehenden Motor.

Die beiden zuletzt zum Stand der Technik beschriebenen Rechenanlagen sind insbesondere vorgesehen für den Zulauf zu einer Kläranlage. Aufgrund ihres aufwendigen Aufbaus sind sie aber nicht geeignet, einem Belebungsbecken nachgeschaltet zu werden, um Agglomerationen zu entfernen. Dazu muss die Rechenanlage einen einfachen, leichten und winterfesten Aufbau haben, der auch noch nachträglich vom Personal der Kläranlage eingebaut werden kann.

Zum Stand der Technik gehört auch die Rechenanlage gemäß der US 4,725,365 A. Diese besitzt einen Schlitten, der stets gleich ausgerichtet auf einer Schiene hoch und runter gefahren wird. Ein Abstreifer ist an einem Auslegearm befestigt, der schwenkbar am Schlitten gehalten ist und der je nach Fahrtrichtung des Schlittens auf den Rechen gekippt oder von ihm abgehoben wird.

Bei einer Rechenanlage gemäß der US 5,246,573 A wird der Schlitten mit dem Abstreifer als Ganzes gekippt. Dazu werden die von einem Motor angetriebenen Ritzel, deren Achse versetzt zur Kippachse verläuft, durch eine Kurvenbahn geführt.

Die FR 639.303 A offenbart eine Rechenanlage mit einem geradlinig geführten Schlitten, der über eine Kette von einem externen Motor angetrieben wird. Ein Abstreifer ist kippbar an dem Schlitten gehalten und wird von einem lösbaren Hakensystem in einer vom Rechen entfernten Position gehalten, wenn der Schlitten nach oben gezogen wird.

Die Erfindung beruht daher auf der Aufgabe, eine einfach aufgebaute Rechenanlage zu schaffen.

Zur Lösung der Aufgabe schlägt die Erfindung vor, dass sich am oberen Ende der Schienen jeweils eine verschwenkbare Rampenklappe befindet, die nach unten von der Schiene wegweist, so dass die Rollen des Rollenpaares die Rampenklappe am Ende der Aufwärtsfahrt unterfahren und diese dabei anheben. Ferner weist jede der Schienen in ihrem oberen Bereich eine Lücke auf. Brückenklappen sind vorgesehen, die jeweils an dem an die Lücke angrenzenden Ende des oberen Abschnittes der Schiene angelenkt sind. Die Rampenklappen sind schließlich an dem an die Lücke angrenzenden Ende des unteren Abschnitts der Schiene angelenkt.

Bei dieser Konstruktion wird nur ein Schienenpaar benötigt, da bei einer Aufwärtsfahrt der Schlitten vom Abstreifer gestützt wird und sich das Rollenpaar frei unterhalb des einen Schienenpaares befindet. Für eine erneute Abwärtsfahrt werden die Rollen des Rollenpaares durch die Rampenklappen, die sie zuvor unterfahren haben, wieder auf die Schienen des einzigen Schienenpaares geleitet.

Der Schlitten weist zwei Rollenpaare auf, nämlich ein unteres was dem oben beschriebenen Rollenpaar entspricht, und ein oberes Rollenpaar. Das obere Rollenpaar verbleibt bevorzugt stets auf der Schiene und bildet quasi den Kipppunkt für den Schlitten. Durch die Lücke im oberen Bereich der Schiene gelangt das untere Rollenpaar am Beginn einer Abwärtsfahrt wieder auf die Schiene. Für die Rollen des oberen Rollenpaares bilden die oberen und die unteren Abschnitte der Schienen sowie die die Lücken überbrückenden Brückenklappen jeweils eine durchgehende Fahrbahn. Die Rollen des oberen Rollenpaares bleiben somit stets auf der Höhe der Schienen.

Bei der Abwärtsfahrt läuft, wie schon erläutert, das untere Rollenpaar die Rampenklappe nach oben und drückt dabei die Brückenklappe nach oben, die wieder in ihre Ursprungsposition zurückklappt, sobald sich die Rollen des unteren Rollenpaares wieder auf den Schienen befinden, so dass bei der weiteren Abwärtsfahrt des Schlittens das obere Rollenpaar die heruntergeklappten Brückenklappen passieren kann.

Bei einer solchen Ausführung der Erfindung passiert Folgendes: Wenn der Schlitten das untere Ende der Schienen erreicht, überfahren die Rollen des unteren Rollenpaares die Enden, so dass der Schlitten nach unten in Richtung auf den Rechen kippt, wodurch der Abstreifer zur Auflage auf dem Rechen kommt. Bei der Aufwärtsfahrt fährt somit der Abstreifer über den Rechen und nimmt dort liegendes Rechengut mit. Am oberen Ende der Rechenanlage erreicht der Abstreifer eine Abwurfkante, wo das gesammelte Rechengut in einen Behälter abgeschoben wird. Bei der nun folgenden Abwärtsfahrt läuft das Rollenpaar über die Rampenklappe, welche zuvor vom Rollenpaar unterfahren worden ist, wiederum auf die Schienen, so dass der Abstreifer vom Rechen abgehoben wird und bei der Abwärtsfahrt von dem Rechen entfernt bleibt. Erst wenn das untere Ende der Schienen wieder erreicht ist, fällt der Schlitten mit dem Abstreifer erneut auf den Rechen.

Um zu erreichen, dass der Abstreifer bei der Aufwärtsfahrt belastet ist, sieht die Erfindung vor, dass der Abstreifer an der Unterseite des Schlittens und der Motor auf dem Schlitten befestigt sind. Damit liegt das Gewicht des Motors auf dem Abstreifer, wodurch verhindert wird, dass loses Rechengut vom Abstreifer überfahren wird.

Sollte sich aber Rechengut im Rechen verhakt haben, darf der Schlitten nicht blockiert werden, dazu muss der Abstreifer nach oben ausweichen können. Die Erfindung sieht daher vor, dass der Abstand der Achse des Rollenpaares das sich bei einer Aufwärtsfahrt unterhalb der Schienen befindet, zur unteren Kante des Abstreifers um den Radius der Rollen des Rollenpaares und einen Freiraum kleiner ist als der Abstand des Rechens zum Schienenpaar. Je größer der Freiraum gewählt wird, umso mehr kann der Abstreifer nach oben ausweichen und im Rechen verhaktes Rechengut überfahren. Bei einer Ausführung mit zwei Rollenpaaren ist das Rollenpaar, das sich bei einer Aufwärtsfahrt unterhalb der Schienen befindet, das untere Rollenpaar.

Eine kompakte Bauweise wird erreicht, wenn die Rechenanlage einen rinnenförmigen Maschinenrahmen mit einem Boden und zwei Seitenwänden oberhalb des Bodens aufweist, wobei wenigstens der untere Abschnitt des Bodens von dem Rechen gebildet ist und die obere Kante des Bodens eine Abwurfkante formt. Dabei sind die Schienen vorzugsweise an den Innenseiten der Seitenwände befestigt.

Damit der Motor in der Lage ist, den Schlitten anzutreiben, besitzt er ein Getriebe mit einem Ritzel an dessen Ausgangswelle, wobei das Ritzel in eine Zahnstange eingreift.

Da im Gegensatz zu der oben genannten Technik kein umlaufender Antrieb vorgesehen werden kann, muss eine Umschaltung der Drehrichtung des Antriebsritzels erfolgen, das einfacherweise natürlich durch eine Änderung der Drehrichtung des Motors erfolgt.

Dazu sind an der unteren und an der oberen Endposition des Schlittens Fühler vorgesehen. Diese können z. B. Wechselschalter auf dem Schlitten mechanisch betätigen. Denkbar sind aber auch Sensoren, aufgrund deren Schaltzustandes der Motor entsprechend angesteuert wird.

Zum Aufbau der Rechenanlage wird der Maschinenrahmen in einen wasserführenden Kanal eingesetzt, wobei der Maschinenrahmen um eine Querachse drehbar an Drehlager aufweisenden Sockeln befestigt wird.

Die genaue Lage der Ansatzpunkte des Lagers richtet sich nach der gewünschten Aufstellschräge des Rechens im Kanal sowie der Tiefe des Kanals. Daher sieht die Erfindung vor, dass an beiden Außenseiten vorbereitete Befestigungsmittel für an den Maschinenrahmen ansetzbare Sockel vorhanden sind, die eine angepasste Befestigung erlauben. Eine drehbare Lagerung erlaubt es, den Maschinenrahmen z. B. zu Reinigungs- oder Wartungszwecken aus dem Kanal heraus zu schwenken.

Um eine aufgestellte Position des Maschinenrahmens zu fixieren, ist weiterhin ein klappbarer Bügel vorgesehen, der unter den aufgestellten oberen Abschnitt des Maschinenrahmens geklappt werden kann.

Im Folgenden soll anhand eines Ausführungsbeispiels die Erfindung näher erläutert werden. Dazu zeigen:
- Fig. 1: eine perspektivische Darstellung der erfindungsgemäßen Rechenanlage mit einem einen Abstreifer aufweisenden Schlitten, eingesetzt in einen wasserführenden Kanal,
- Fig. 2: einen Längsschnitt durch die Rechenanlage gemäß Fig. 1 durch deren unteres, in den Kanal eintauchendes Ende, wobei sich der Schlitten dort befindet,
- Fig. 3: einen Längsschnitt durch die Rechenanlage gemäß Fig. 1 durch deren oberes, aus dem Kanal hervorstehendes Ende, wobei sich der Schlitten dort befindet und
- Fig. 4: einen Querschnitt durch die Rechenanlage gemäß Fig. 1 durch deren mittleren Bereich, wobei sich der Schlitten dort in einer Aufwärtsfahrt befindet.

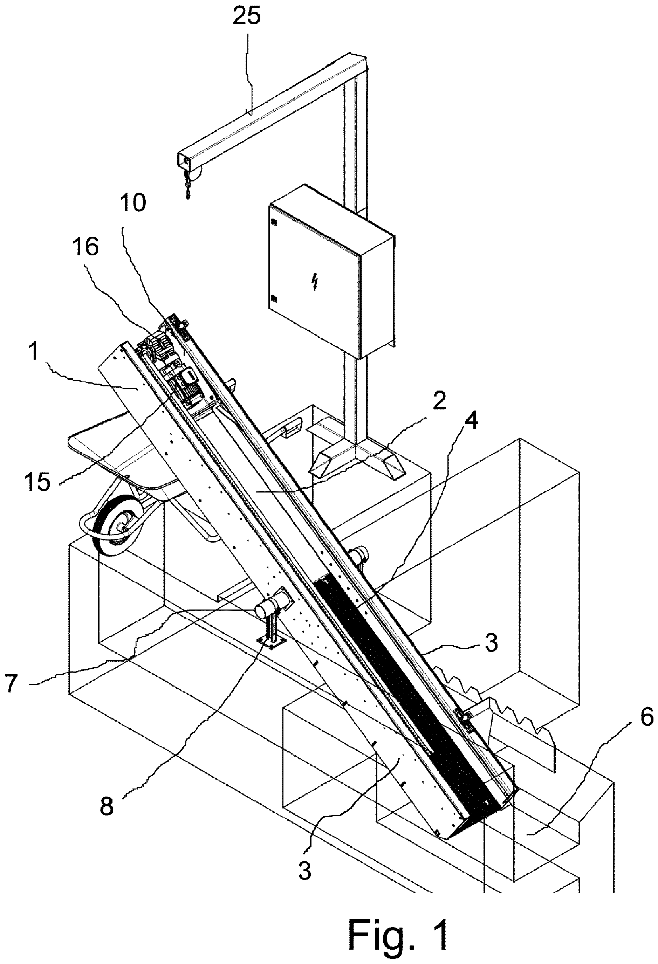

Die Fig. 1 zeigt eine Rechenanlage, bestehend aus einem rinnenförmigen Maschinenrahmen 1 mit einem Boden 2 und zwei Seitenwänden 3. Der Boden ist im unteren Abschnitt als Rechen 4 ausgeführt, der aus eng beieinander liegenden Längsstreben besteht, die parallel zueinander und in Längsrichtung des Maschinenrahmens 1 verlaufen. Der Rechen liegt austauschbar im Maschinenrahmen, so dass - entsprechend den jeweiligen Anforderungen - Rechen mit unterschiedlichen Spaltbreiten eingesetzt werden können. Typische Spaltbreiten liegen dabei zwischen 2 mm und 3 cm.

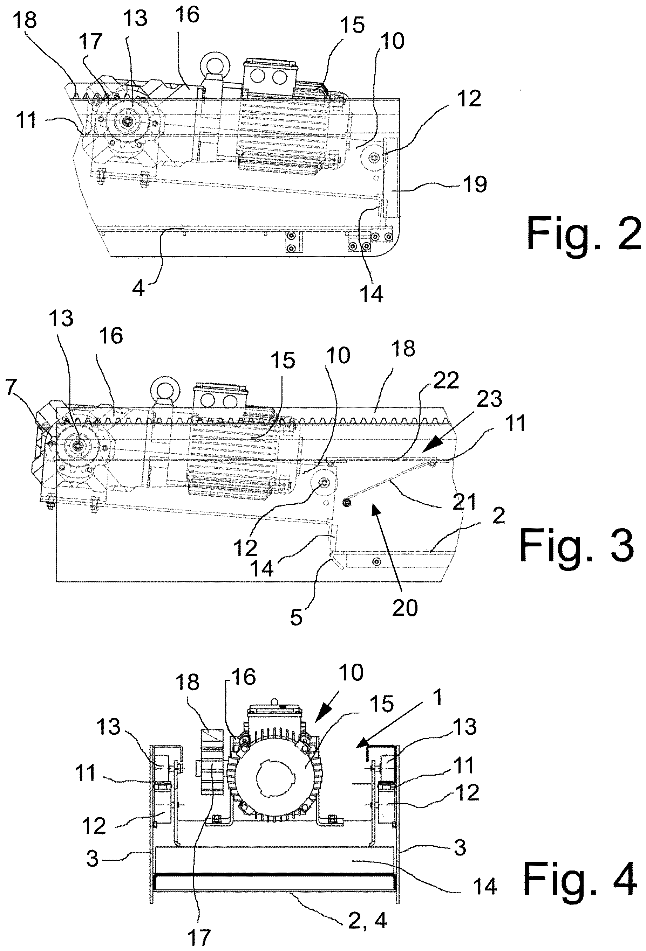

Der obere Abschnitt ist eine geschlossene Fläche und endet in einer Abwurfkante 5 (siehe Fig. 3). Das untere Ende des Maschinenrahmens 1 ist in einem Kanal 6 eingesetzt, wobei der Maschinenrahmen schräg aus dem Kanal 6 herausragt und sein oberes Ende über einem Auffangbehälter endet, hier in Form einer Schubkarre.

Der Maschinenrahmen ist drehbar um eine Querachse 7 gelagert. Dazu sind zwei Sockel 8 vorgesehen, die mit Drehlagern im mittleren Bereich des Maschinenrahmens 1 links und rechts an dessen Seitenwänden befestigt sind. Um eine Anpassung an die räumlichen Gegebenheiten zu gestatten, können die Sockel 8 versetzt werden. Um dies zu erleichtern, sind in den Seitenwänden 3, was hier nicht näher gezeigt ist, vorbereitete Befestigungspunkte vorgesehen.

Damit der Maschinenrahmen 1 in der aufgestellten Position bleibt, ist ein hier nicht dargestellter Bügel vorgesehen, der unter den oberen Abschnitt des Maschinenrahmens 1 geklappt werden kann. Um ggf. Reparaturen oder Reinigungsarbeiten durchführen zu können, wird der Bügel nach unten geklappt und der Maschinenrahmen 1 um seine Querachse in eine waagerechte Position gedreht.

Im Folgenden werden an Hand der Fig. 2 bis 4 Details der Rechenanlage erläutert. In dem Maschinenrahmen 1 befindet sich ein Schlitten 10, der auf zwei parallel verlaufenden Schienen 11 geführt wird, die jeweils an der Innenseite einer der Seitenwände 3 befestigt sind. Auf diese Weise kann der Schlitten 10 in dem Maschinenrahmen 1 auf- und abgefahren werden.

Der Schlitten besitzt dazu zwei Rollenpaare 12, 13, nämlich ein unteres Rollenpaar 12 und ein oberes Rollenpaar 13, deren Rollen auf den Schienen laufen. An der Unterseite des Schlittens ist unterhalb des unteren Rollenpaares 12 ein Abstreifer 14 befestigt, der mit seiner unteren Kante auf den Boden des Maschinenrahmens 1 aufsetzbar ist.

Auf dem Schlitten 10 befindet sich ein Motor 15 mit einem Getriebe 16, an dessen Ausgangswelle ein Ritzel 17 befestigt ist, das sich an der Schlittenseite befindet. Das Ritzel greift in eine Zahnstange 18 (siehe Fig. 4) ein, so dass je nach Drehrichtung des Motors der Schlitten eine Auf- oder Abwärtsfahrt vollzieht. Alternativ kann auch ein Spindelantrieb vorgesehen werden.

Wie in der Fig. 2 vergrößert dargestellt ist, ist das untere Ende einer jeden Schiene 11 offen, so dass, wenn das untere Rollenpaar 12 das Ende der Schienen erreicht und darüber hinaus fährt, der Schlitten 10 nach unten kippt, so dass der Abstreifer 14 auf den Rechen 4 aufgesetzt ist. Da das obere Rollenpaar 13 sich noch auf den Schienen befindet, erfolgt die Kippbewegung um die Achse des oberen Rollenpaares 13. Ein Anschlag 19 verhindert ggf., dass der Schlitten 10 ganz von den Schienen 11 rutscht.

Bei einer Aufwärtsfahrt - wie sie in der Querschnittsdarstellung der Fig. 4 gezeigt ist - wird der Schlitten 10 nach oben gezogen, wobei der Abstreifer 14 auf dem Rechen 4 bzw. dem Boden 2 verbleibt und dabei das sich dort befindende Rechengut mitnimmt. Die Rollen des unteren Rollenpaares 12 befinden sich dabei unterhalb der Schienen 11.

Das Gewicht des Schlittens 10 mit dem Motor 15 und dem Getriebe 16 liegt somit einerseits auf dem oberen Rollenpaar 13 und andererseits auf dem Abstreifer 14, der dadurch unabhängig von dessen Verschleiß stets fest auf den Rechen 4 aufgedrückt wird, da der Schlitten zum Ausgleich des Verschleißes ein wenig weiter um die Achse des oberen Rollenpaares 13 nach unten verschwenkt wird.

Sobald der Schlitten 10 - wie in Fig. 3 dargestellt - das obere Ende des Maschinenrahmens 1 erreicht hat, wird das gesammelte Rechengut über die Abwurfkante 5 in den darunter stehenden Behälter geschoben. Bei der Abwärtsfahrt des Schlittens muss der Abstreifer 14 vom Rechen 4 abgehoben sein. Dazu wird mittels einer Weiche 20 das untere Rollenpaar 12 auf die Schienen 11 verfahren.

Die Weiche 20 besteht jeweils aus einer Rampenklappe 21 und einer Brückenklappe 22 in einer Lücke 23 in den Schienen 11. Die Rampenklappe 21 ist an das Ende des unteren Schienenabschnitts angelenkt und ist in ihrer Grundposition nach unten gegen den Boden 2 des Maschinenrahmens 1 geklappt. Die Brückenklappe 22 liegt darüber und ist an den oberen Abschnitt der Schiene 11 angelenkt und liegt in ihrer Grundposition mit ihrem freien Ende am oberen Ende des unteren Schienenabschnittes auf. Befindet sich nun der Schlitten 10 in einer Aufwärtsfahrt, so können die Rollen des unteren Rollenpaares 12 die Rampenklappe 21 unterfahren, die dabei leicht angehoben wird und wieder zurückklappt, sobald die Rollen sie passiert haben. Bei der Rückwärtsfahrt laufen die Rollen des unteren Rollenpaares 12 die Rampenklappe 21 hinauf, drücken die Brückenklappe 22 nach oben und erreichen die Schienen 11. Sobald sie sich von der Brückenklappe 22 entfernt haben, klappt diese wieder nach unten, so dass die nachfolgenden Rollen des oberen Rollenpaares 13 über die die Schienenlücke schließende Brückenklappe 22 fahren.

Zur Stabilisierung des Laufs des Schlittens können zusätzlich zu den Rollen, die auf den Schienen laufen, noch seitliche Führungsrollen (hier nicht dargestellt) angebracht werden, die an den Seitenwänden 3 abrollen.

Die Stromversorgung des Motors erfolgt über ein flexibles Kabel. Hier sind verschiedene Ausführungen denkbar. Es kann ein flexibles Kabel sein, das von einem Galgen 25 (siehe Fig. 1) herunterhängt, denkbar wäre aber auch ein Schleppkabel oder eine Energieführungskette (Schleppkettenkabel) .

### Bezugszeichenliste

- 1: Maschinenrahmen
- 2: Boden
- 3: Seitenwände
- 4: Rechen
- 5: Abwurfkante

- 6: Kanal
- 7: Querachse
- 8: Sockel

- 10: Schlitten

- 11: Schienen
- 12: unteres Rollenpaar
- 13: oberes Rollenpaar
- 14: Abstreifer
- 15: Motor

- 16: Getriebe
- 17: Ritzel
- 18: Zahnstange
- 19: Anschlag
- 20: Weiche

- 21: Rampenklappe
- 22: Brückenklappe
- 23: Lücke

- 25: Galgen

## Patentansprüche

1. Eine schräg in einen offenen Kanal (6) aufstellbare Rechenanlage mit
einem Rechen (4) und einer Räumvorrichtung, die einen auf den Rechen (4) aufsetzbaren Abstreifer (14) aufweist,
einem Schlitten (10) mit dem Abstreifer (14), einem Motor auf dem Schlitten zum Antrieb des Schlittens und wenigstens einem Rollenpaar (12), und mit einem parallel zum Rechen (4) verlaufenden, aus zwei Schienen (11) bestehenden Schienenpaar, das ein oberes und ein unteres Ende aufweist, wobei die unteren Enden der Schienen (11) offen sind;
der Schlitten (10) ist um eine quer zu den Schienen (11) verlaufende Kippachse kippbar, so dass bei einer Abwärtsfahrt vom oberen zum unteren Ende der Schienen (11) die Rollen des Rollenpaares (12) auf den Schienen laufen, wobei der Abstreifer (14) einen Abstand zum Rechen (4) einhält, und bei einer Aufwärtsfahrt, nachdem die Rollen das offene Ende der Schienen überfahren haben, der Schlitten (10) derart um seine Kippachse gekippt ist, dass der Abstreifer (14) auf dem Rechen (4) aufliegt und die Rollen des Rollenpaares (12) sich bei einer Aufwärtsfahrt unterhalb der Schienen (11) befinden,
wobei das Rollenpaar (12) ein unteres Rollenpaar ist und der Schlitten ferner ein oberes Rollenpaar (13) besitzt,
**dadurch gekennzeichnet, dass**
sich am oberen Ende der Schienen (11) jeweils eine verschwenkbare Rampenklappe (21) befindet, die nach unten von der Schiene wegweist, so dass die Rollen des Rollenpaares (12) die Rampenklappe (21) am Ende der Aufwärtsfahrt unterfahren und diese dabei anheben;
jede der Schienen (11) in ihrem oberen Bereich eine Lücke (23) aufweist;
Brückenklappen (22) jeweils an dem an die Lücke (23) angrenzenden Ende des oberen Abschnittes der Schiene angelenkt sind; und
die Rampenklappen (21) jeweils an dem an die Lücke (23) angrenzenden Ende des unteren Abschnittes der Schiene (11) angelenkt sind.

2. Rechenanlage nach dem vorhergehenden Anspruch, **dadurch gekennzeichnet, dass** der Abstreifer (14) an der Unterseite des Schlittens (10) und der Motor (15) auf dem Schlitten (10) befestigt sind.

3. Rechenanlage nach einem der vorhergehenden Ansprüche, **dadurch gekennzeichnet, dass** der Abstand der Achse des unteren
Rollenpaares (12), das sich bei einer Aufwärtsfahrt unterhalb der Schienen (11) befindet, zur unteren Kante des Abstreifers (14) um den Radius der Rollen des unteren
Rollenpaares (12) und einen Freiraum kleiner ist als der Abstand des Rechens (4) zum Schienenpaar.

4. Rechenanlage nach einem der vorhergehenden Ansprüche, **dadurch gekennzeichnet, dass** diese einen rinnenförmigen Maschinenrahmen (1) mit einem Boden (2) und zwei Seitenwänden (3) oberhalb des Bodens (2) aufweist, wobei wenigstens der untere Abschnitt des Bodens (2) von dem Rechen (4) gebildet ist und die obere Kante des Bodens (2) eine Abwurfkante (5) formt.

5. Rechenanlage nach Anspruch 4, **dadurch gekennzeichnet, dass** die Schienen (11) an den Innenseiten der Seitenwände (3) befestigt sind.

6. Rechenanlage nach einem der vorhergehenden Ansprüche, **dadurch gekennzeichnet, dass** der Motor (15) ein Getriebe (16) mit einem Ritzel (17) an seiner Ausgangswelle besitzt, das in eine Zahnstange (18) eingreift.

7. Rechenanlage nach einem der vorhergehenden Ansprüche, **dadurch gekennzeichnet, dass** Fühler an dem unteren und oberen Umlenkpunkt des Schlittens (10) vorgesehen sind.

8. Rechenanlage nach Anspruch 4 oder 5, **dadurch gekennzeichnet, dass** an beiden Außenseiten des Maschinenrahmens (1) vorbereitete Befestigungsmittel für an den Maschinenrahmen (1) ansetzbare Sockel (8) vorgesehen sind.

## Claims

1. A screen unit that can be installed at an angle in an open channel (6) with
a rake (4) and a clearing device which has a scraper (14) that can be placed on the rake (4), a carriage (10) with the scraper (14), a motor on the carriage to drive the carriage and at least one pair of rollers (12),
and with a pair of slides running parallel to the rake (4) and consisting of two rails (11), which have an upper and a lower end, the lower ends of the rails (11) being open;
the carriage (10) can be tilted about a tilting axis extending transversely to the rails (11), so that during downward travel from the upper to the lower end of the rails (11) the rollers of the pair of rollers (12) run on the rails, the scraper (14) maintaining a distance from the rake (4), and during an upward movement, after the rollers have passed over the open end of the rails, the carriage (10) is tilted about its tilting axis in such a way that the scraper (14) rests on the rake (4) and the rollers of the pair of rollers (12) are located below the rails (11) during an upward movement,
wherein the pair of rollers (12) is a lower pair of rollers, and the carriage further has an upper pair of rollers (13),
**characterised in that**
there is a swivelling ramp flap (21) at the upper end of each rail (11), which points downwards away from the rail, so that the rollers of the roller pair (12) drive over the ramp flap (21) at the end of the upward travel and lift it in the process;
each of the rails (11) has a gap (23) in its upper area;
bridge flaps (22) are each hinged to the end of the upper portion of the rail adjacent to the gap (23); and
the ramp flaps (21) are each hinged to the end of the lower section of the rail (11) adjacent to the gap (23).

2. Screen unit according to the preceding claim, **characterised in that** the scraper (14) is attached to the underside of the carriage (10) and the motor (15) is attached to the carriage (10).

3. Screen unit according to any of the preceding claims, **characterised in that** the distance between the axis of the lower pair of rollers (12), which is located below the rails (11) during an upward movement, and the lower edge of the scraper (14) is smaller than the distance between the rake (4) and the pair of rails by the radius of the rollers of the lower pair of rollers (12) and a free space.

4. Screen unit according to one of the preceding claims, **characterised in that** it has a channel-shaped machine frame (1) with a bottom (2) and two side walls (3) above the bottom (2), at least the lower section of the bottom (2) being formed by the rake (4) and the upper edge of the bottom (2) forming a discharge edge (5).

5. screen unit according to claim 4, **characterised in that** the rails (11) are attached to the inner sides of the side walls (3).

6. Screen unit according to one of the preceding claims, **characterised in that** the motor (15) has a gear (16) with a pinion (17) on its output shaft, which engages in a toothed rack (18).

7. Screen unit according to one of the preceding claims, **characterised in that** sensing elements are provided at the lower and upper deflection point of the slide (10).

8. Screen unit according to claim 4 or 5, **characterised in that** prepared fastening means are provided on both outer sides of the machine frame (1) for bases (8) which can be attached to the machine frame (1).

## Revendications

1. Un dégrilleur pouvant être installé en biais dans un canal ouvert (6), avec
un râteau (4) et un dispositif de déblaiement, qui présente un racleur (14) pouvant être placé sur le râteau (4),
un chariot (10) avec le racleur (14), un moteur sur le chariot pour l'entraînement du chariot et au moins une paire de rouleaux (12),
et avec une paire de rails s'étendant parallèlement au râteau (4), constituée de deux rails (11), qui présentent une extrémité supérieure et une extrémité inférieure, les extrémités inférieures des rails (11) étant ouvertes ;
le chariot (10) peut basculer autour d'un axe de basculement s'étendant transversalement aux rails (11), de sorte que, lors d'un trajet descendant de l'extrémité supérieure à l'extrémité inférieure des rails (11), les rouleaux de la paire de rouleaux (12) se déplacent sur les rails, le racleur (14) étant maintenu à une certaine distance du râteau (4), et lors d'un déplacement vers le haut, après que les galets ont franchi l'extrémité ouverte des rails, le chariot (10) est basculé autour de son axe de basculement de telle sorte que le racleur (14) repose sur le râteau (4) et que les galets de la paire de galets (12) se trouvent en dessous des rails (11) lors d'un déplacement vers le haut,
dans lequel la paire de rouleaux (12) est une paire de rouleaux inférieurs, et le chariot comporte en outre une paire de rouleaux supérieurs (13),
**caractérisé en ce que**
à l'extrémité supérieure de chacun des rails (11) se trouve un volet de rampe (21) pivotant, qui est orienté vers le bas en s'éloignant du rail, de sorte que les rouleaux de la paire de rouleaux (12) passent sur le volet de rampe (21) à la fin de la course ascendante et le soulèvent ;
chacun des rails (11) présente un espace (23) dans sa partie supérieure;
des volets de pont (22) sont articulés chacun à l'extrémité de la partie supérieure du rail adjacente à l'espace (23); et
les volets de rampe (21) sont chacun articulés à l'extrémité de la section inférieure du rail (11) adjacente à l'espace (23).

2. Degrilleur selon la revendication précédente, **caractérisé en ce que** le racleur (14) est fixé sur la face inférieure du chariot (10) et le moteur (15) est fixé sur le chariot (10).

3. Degrilleur selon l'une des revendications précédentes, **caractérisé en ce que** la distance entre l'axe de la paire de rouleaux inférieure (12), qui se trouve sous les rails (11) lors d'un déplacement vers le haut, et le bord inférieur du racleur (14) est inférieure du rayon des rouleaux de la paire de rouleaux inférieure (12) et d'un espace libre à la distance entre le râteau (4) et la paire de rails.

4. Degrilleur selon l'une des revendications précédentes, **caractérisé en ce qu'**il comprend un châssis de machine (1) en forme de gouttière avec un fond (2) et deux parois latérales (3) au-dessus du fond (2), au moins la partie inférieure du fond (2) étant formée par le râteau (4) et le bord supérieur du fond (2) formant un bord de déversement (5).

5. Degrilleur selon la revendication 4, **caractérisé en ce que** les rails (11) sont fixés sur les côtés intérieurs des parois latérales (3).

6. Degrilleur selon l'une des revendications précédentes, **caractérisé en ce que** le moteur (15) comporte un engrenage (16) avec un pignon (17) sur son arbre de sortie qui engrène avec une crémaillère (18) .

7. Degrilleur selon l'une des revendications précédentes, **caractérisé en ce que** des capteurs sont prévus au niveau des points de renvoi inférieur et supérieur du chariot (10).

8. Degrilleur selon la revendication 4 ou 5, **caractérisé en ce que** des moyens de fixation préparés sur les deux côtés extérieurs du châssis de machine (1) sont prévus pour des socles (8) pouvant être montés sur le châssis de machine (1).
